# EUROPÄISCHE PATENTSCHRIFT

(11) **EP 0 870 544 B1**
(45) Veröffentlichungstag und Bekanntmachung des Hinweises auf die Patenterteilung: **05.02.2003**
(21) Anmeldenummer: 98105592.4
(22) Anmeldetag: 27.03.1998
(51) Int. Cl.: B01J 41/14, B01J 41/04, C08F 8/44

(54) **Verfahren zur Herstellung stark basischer Anionenaustauscher mit Ethylenoxid**
Process for preparation of strong basic anion exchangers with ethylene oxide
Procédé de préparation de d'échangeurs d'anions fortement basique à l'aide d'oxyde d'éthylène

(30) Priorität: 09.04.1997 DE 19714582
(43) Veröffentlichungstag der Anmeldung: 14.10.1998
(73) Patentinhaber: BAYER AG, 51368 Leverkusen (DE)
(72) Erfinder: Lütjens, Holger, Dr., 51065 Köln (DE); Ingendoh, Axel, Dr., 51519 Odenthal (DE); Gassen, Karl-Rudolf, Dr., 40882 Ratingen (DE); Wenzl, Peter, Dr., 51061 Köln (DE); Rall, Klaus, Dr., 51061 Köln (DE)

(56) Entgegenhaltungen:
- DE-B- 1 054 715
- GB-A- 448 251
- GB-A- 721 979
- US-A- 4 675 180

## Beschreibung

Die Erfindung betrifft ein Verfahren zur Herstellung stark basischer Anionenaustauscher auf Basis vernetzter Vinylaromat-Polymerisate durch Umsetzung schwach basischer Anionenaustauscher, die tertiäre Aminogruppen tragen, mit Ethylenoxid unter definierten Bedingungen.

Schwach basische Anionenaustauscher sind wasserunlösliche Polymerisate, die primäre und/oder sekundäre und/oder tertiäre Aminogruppen enthalten, wobei die Anionenaustauscher mit primären Aminogruppen als Ausgangsprodukte für die Herstellung der Anionenaustauscher mit sekundären bzw. tertiären Aminogruppen bzw. mit quaternären Ammoniumgruppen dienen können.

Stark basische Anionenaustauscher enthalten quaternäre Ammoniumgruppen, vorzugsweise solche vom Typ I: 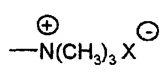 oder vom Typ II: 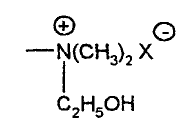 worin X⁻ jeweils ein Anion der Reihe Hydroxyl, Chlorid, Sulfat, Bromid, Iodid, Fluorid, Sulfid, Hydrogensulfat, Hydrogensulfid, Phosphat, Di-Phosphat, Monophosphat, Carbonat, Hydrogencarbonat, Citrat, Tartrat, Phthalat bedeutet.

Beide Typen besitzen unterschiedliche Basizität, und wie auch sonst in der Ionenaustauschertechnologie üblich wählt man sich auch bei Anionenaustauschern - je nach Art der zu bewältigenden Aufgabe - das Harz nach seiner Basizität aus. Während die Anionenaustauscher des Typs I durch Umsetzung von Harzen, die primäre Aminogruppen tragen, mit üblichen Alkylierungsmitteln wie Methylchlorid zugänglich sind, erhält man die des Typs II durch Umsetzung von Harzen, die tertiäre Aminogruppen tragen, mit Chlorethanol. Eine derartige Umsetzung zum Typ II wird beispielsweise in Beispiel 6 der DE-AS 1 054 715 beschrieben: Dort leitet man Ethylenoxid bei 30°C durch eine Mischung von verdünnter Schwefelsäure und einen schwach basischen Anionenaustauscher, der Dimethylaminogruppen trägt.

Es hat sich allerdings herausgestellt, daß diese stark basischen Anionenaustauscher zwar die ihnen zugedachte Aufgabe erfüllen, aber Verunreinigungen, die von ihrer Herstellung herrühren oder während des Gebrauches entstehen, an ihre Umgebung abgeben. Die Aufgabe der Erfindung bestand also darin, stark basische Anionenaustauscher vom Typ II bereitzustellen, die den Ionenaustauschern des Standes der Technik in dieser Hinsicht überlegen sind.

In der Vergangenheit hat man versucht, Verbindungen, die bei der Ionenaustauscherherstellung entstehen - seien es nicht umgesetzte Ausgangsmaterialien oder niedermolekulare unvernetzte Polymere - durch wiederholtes Auswaschen mit Wasser zu entfernen, was aufwendig ist und nur teilweisen Erfolg bringt.

Überraschenderweise wurde nun gefunden, daß überlegene stark basische Anionenaustauscher des Typs II dann entstehen, wenn man bei der Quaternierung unter bestimmten Temperatur- und pH-Bedingungen arbeitet.

Gegenstand der Erfindung ist also ein Verfahren zur Herstellung stark basischer Anionenaustauscher auf Basis vernetzter Vinylaromat-Polymerisate durch Umsetzung schwach basischer Anionenaustauscher, die tertiäre Aminogruppen tragen, mit Ethylenoxid, dadurch gekennzeichnet, daß man die schwach basischen Anionenaustauscher mit Ethylenoxid bei 70 bis 75°C und einem pH-Wert von 7 bis 11, vorzugsweise 8 bis 10, reagieren läßt.

Die den Ionenaustauschern zugrundeliegenden Vinylaromat-Polymerisate sind Polymerisate auf Basis von Vinylaromaten wie Styrol, Vinyltoluol, Ethylstyrol, α-Methylstyrol, Chlorstyrol, o-Chlormethylstyrol, m-Chlormethylstyrol, p-Chlormethylstyrol, Vinylpyridin, Vinylnaphthalin. Es können auch Polymerisate eingesetzt werden, bei deren Herstellung nicht-aromatische Monomere mit einer copolymerisierbaren Doppelbindung pro Molekül mitverwendet werden. Solche Monomere umfassen beispielsweise Acrylsäure, Methacrylsäure, Acrylsäureester, Methacrylsäureester, Acrylnitril, Methacrylnitril, Acrylamid, Methacrylamid, Vinylchlorid, Vinylidenchlorid, Vinylacetat. Die monoethylenisch ungesättigten Monomeren für die Herstellung der Vinylaromat-Polymerisate enthalten vorzugsweise nicht mehr als 10 Gew.-% dieser nicht-aromatischen Monomeren, bezogen auf das Gesamtgewicht der Monomeren.

Die Vinylaromat-Polymerisate sind vernetzt - vorzugsweise durch Copolymerisation mit vernetzenden Monomeren mit mehr als einer, vorzugsweise mit 2 oder 3, copolymerisierbaren C=C-Doppelbindung(en) pro Molekül. Solche vernetzenden Monomeren umfassen beispielsweise polyfunktionelle Vinylaromaten wie Di- und Trivinylbenzole, Divinylethylbenzol, Divinyltoluol, Divinylxylol, Divinylnaphthalin, polyfunktionelle Allylaromaten wie Di- und Triallylbenzole, Cyanurate oder Isocyanurate wie Trivinylcyanurat, Triallylcyanurat, Trivinylisocyanurat, Triallylisocyanurat, N,N'-C₁-C₆-Alkylendiacrylamide und -dimethacrylamide wie N,N'-Methylendiacrylamid und -dimethacrylamid, N,N'-Ethylendiacrylamid und -dimethacrylamid, Polyvinyl- und Polyallylether gesättigter C₂-C₂₀-Polyole mit 2 bis 4 OH-Gruppen pro Molekül, wie z.B. Ethylenglykoldivinyl- und -diallylether und Diethylenglykoldivinyl- und -diallylether, Ester der Acrylsäure und Methacrylsäure mit ungesättigten C₃-C₁₂-Alkoholen oder gesättigten C₂-C₂₀-Polyolen mit 2 bis 4 OH-Gruppen pro Molekül wie Allylmethacrylat, Ethylenglykoldi(meth)acrylat, Glycerintri(meth)acrylat, Pentaerythrittetra(meth)acrylat und Divinylethylenharnstoff und Divinylpropylenharnstoff und Divinyladipat, aliphatische und cycloaliphatische Olefine mit 2 oder 3 isolierten C=C-Doppelbindungen wie Hexadien-1,5, 2,5-Dimethylhexadien-1,5, Octadien-1,7, 1,2,4-Trivinylcyclohexan. Als vernetzende Monomere haben sich Divinylbenzol (als Isomerengemisch) sowie Mischungen aus Divinylbenzol und aliphatischen C₆-C₁₂-Kohlenwasserstoffen mit 2 oder 3-C=C-Doppelbindungen besonders bewährt. Die vernetzenden Monomeren werden im allgemeinen in Mengen von 2 bis 20 Gew.-%, vorzugsweise 2 bis 12 Gew,.-%, bezogen auf die Gesamtmenge der eingesetzten polymerisierbaren Monomeren, eingesetzt.

Die vernetzenden Monomeren müssen nicht in reiner Form, sondern können auch in Form ihrer technisch gehandelten Mischungen minderer Reinheit (wie z.B. Divinylbenzol in Mischungen mit Ethylstyrol) eingesetzt werden.

Für die Herstellung der schwach basischen Anionenaustauscher aus den vernetzten Vinylaromat-Polymerisaten kann man das Chlormethylierungsverfahren oder das Aminomethylierungsverfahren - jeweils mit anschließender Aminierung - verwenden.

Nach dem Chlormethylierungsverfahren stellt man Chlormethylgruppen-haltige vernetzte Vinylaromat-Polymerisate her, die dann mit nicht-tertiären Aminen oder Polyaminen umgesetzt werden, wie z.B. die Umsetzung von vernetztem Polystyrol mit Monochlordimethylether und nachfolgende Aminierung mit Dimethylamin.

Nach dem Aminomethylierungsverfahren setzt man dagegen vernetzte Vinylaromat-Polymerisate mit reaktionsfähigen Phthalimidderivaten, wie z.B. N-Chlormethylphthalimid, um und hydrolisiert die resultierenden Imide zu den entsprechenden primären Aminen. Diese primären Aminogruppen können nun ihrerseits mit üblichen Alkylierungsmitteln, wie z.B. Methylchlorid, oder durch reduktive Alkylierung nach Leuckart-Wallach mit Carbonylverbindungen und Ameisensäure als Reduktionsmittel umgesetzt werden.

Die tertiäre Aminogruppen tragenden vernetzten Vinylaromat-Polymerisate stellen die Ausgangsprodukte für das erfindungsgemäße Verfahren dar. Sie enthalten vorzugsweise 0,3 bis 2 Aminogruppen pro aromatischem Kern. Die Ausgangsprodukte können gelförmig oder makroporös sein.

Es empfiehlt sich, den schwach basischen Anionenaustauscher (= Ausgangsprodukt) in der tert.-Amin-Form unter Rühren in Wasser zu suspendieren. In der Regel wird man das Wasser schon vor Zugabe des Ausgangsprodukts oder alternativ die Suspension des Ausgangsprodukts in Wasser auf die beabsichtige Reaktionstemperatur aufheizen. Sodann wird Ethylenoxid stufenweise oder - vorzugsweise - möglichst kontinuierlich in einer Geschwindigkeit eingeleitet, die eine zuverlässige Temperaturkontrolle zuläßt. Dabei wird der pH-Wert ständig kontrolliert und durch Zugabe einer geeigneten anorganischen starken Säure, beispielsweise Schwefelsäure, Phosphorsäure, Salzsäure und sonstige Säuren mit einem pKa <2, im anspruchsgemäßen Bereich gehalten, und zwar vorzugsweise während des gesamten Reaktionsverlaufs. Die Gesamtmenge der zuzusetzenden Säure beträgt in der Regel 0,4 bis 0,6, vorzugsweise 0,48 bis 0,52 mol, bezogen auf Aminogruppen des Ausgangsprodukts.

Will man die tertiären Aminogruppen möglichst quantitativ zu quaternären Ammoniumgruppen umsetzen, empfiehlt es sich, pro Mol tertiärer Aminogruppen bis 3, vorzugsweise 1,05 bis 1,5 Mol Ethylenoxid einzusetzen. Nach Beendigung der Ethylenoxidzugabe wird man noch eine angemessene Zeit nachreagieren gelassen. Dabei kann man sich vom Fortschreiten der Reaktion durch Analyse entnommener Proben überzeugen. Nach Ende der Reaktion wird man restliches Ethylenoxid abziehen, das Reaktionsprodukt mit Wasser waschen und gegebenenfalls mit wäßriger Salzlösung in die Chloridform, Hydroxidform oder Sulfatform usw. überführen. Mit dem erfindungsgemäßen Verfahren lassen sich Umsetzungsgrade der tertiären Aminogruppen zu quaternären Ammoniumgruppen von über 95, vorzugsweise über 98 und insbesondere über 99 % erreichen.

Die Prozentangaben der nachfolgenden Beispiele beziehen sich jeweils auf das Gewicht.

### Beispiel 1

3000 N,N-Dimethylamino-methyl-polystyrol werden in 4000 l vollentsalztem Wasser unter Rühren suspendiert. Man erwärmt auf 70°C und dosiert insgesamt 477 kg Ethylenoxid innerhalb von 2 Stunden zu. Die Temperatur wird dabei im Bereich von 70 bis 75°C gehalten. Während der Zudosierung von Ethylenoxid wird der pH-Wert des Ansatz kontinuierlich überwacht. Durch gleichzeitige kontinuierliche Zugabe von 250 bis 3501 96 %iger Schwefelsäure wird der pH-Wert im Bereich von 8 bis 10 gehalten. Nach Ende der Ethylenoxid-Zugabe wird noch 2 Stunden bei 70°C gerührt. Durch Strippen mit Stickstoff und anschließende Druckverminderung bis auf ca. 200 hPa wird nicht umgesetztes Ethylenoxid aus dem Ansatz entfernt. Danach wird das Produkt in einen Waschturm mit Siebboden überführt und mit vollentsalztem Wasser gewaschen. Man gibt 4000 20%ige wäßrige Kochsalzlösung zu und beläßt darin 2 Stunden. Danach wird das Produkt mit vollentsalztem Wasser neutralgespült. Die Totalkapazität wird in val/l gemessen und entspricht der Menge basischer Gruppen pro mol/l Ionenaustauscher.

| | |
|---|---|
| Ausbeute | 4.500 l |
| Totalkapazität | 1,15 val/l |
| Quaternierungsgrad | 99,5 % |
| Gehalt an niedermolekularen Polymeren | nicht nachweisbar. |

### Beispiel 2 (Vergleich ohne pH-Kontrolle)

3000 l N,N-Dimethylamino-methyl-polystyrol werden in 4000 1 vollentsalztem Wasser unter Rühren suspendiert. Man erwärmt auf 70°C und dosiert insgesamt 550 kg Ethylenoxid innerhalb von 4 Stunden zu. Die Temperatur wird dabei im Bereich von 70 bis 75°C gehalten. Durch Strippen mit Stickstoff and anschließende Druckverminderung bis auf ca. 200 hPa wird nicht umgesetztes Ethylenoxid aus dem Ansatz entfernt. Ein Überschuß Ethylenoxid wird deshalb verwendet, weil ein Teil des Ethylenoxids zur Selbstpolymerisation zu Polyethylenglykol neigt. Die Reaktion wird in der Weise gesteuert, daß der Ionenaustauscher vollständig ethoxyliert wird.

Danach wird das Produkt in einen Waschturm mit Siebboden überführt und mit vollentsalztem Wasser gewaschen. Man gibt 4000 1 20%ige wäßrige Kochsalzlösung zu und beläßt darin 2 Stunden. Danach wird das Produkt mit vollentsalztem Wasser neutralgespült.

| | |
|---|---|
| Ausbeute | 4.000 l |
| Totalkapazität | 1,00 val/l |
| Quaternierungsgrad | 88,1 % |
| Gehalt an niedermolekularen unvernetzten Polymeren | =2,5 g/ml. |

## Patentansprüche

1. Verfahren zur Herstellung stark basischer Anionenaustauscher auf Basis vernetzter Vinylaromat-Polymerisate durch Umsetzung schwach basischer Anionenaustauscher, die tertiäre Aminogruppen tragen, mit Ethylenoxid, **dadurch gekennzeichnet, daß** man die schwach basischen Anionenaustauscher mit Ethylenoxid bei 70 bis 75°C und einem pH-Wert von 7 bis 11 reagieren läßt.

2. Verfahren nach Anspruch 1, wonach der pH-Wert während des gesamten Reaktionsverlaufs im Bereich von 7 bis 11 gehalten wird.

3. Verfahren nach Anspruch 1, wonach man die schwach basischen Anionenaustauscher mit Ethylenoxid bei einem pH-Wert von 8 bis 10 reagieren läßt.

4. Verfahren nach Anspruch 1, wonach man den pH-Wert durch kontinuierliche Zugabe von Schwefelsäure einstellt.

## Claims

1. Process for the preparation of strongly basic anion exchangers based on cross-linked vinylaromatic polymers by reacting weakly basic anion exchangers bearing tertiary amino groups with ethylene oxide, **characterized in that** the weakly basic anion exchangers are reacted with ethylene oxide at 70 to 75°C and at a pH of 7 to 11.

2. Process according to Claim 1, wherein the pH is kept in the range from 7 to 11 during the entire course of the reaction.

3. Process according to Claim 1, wherein the weakly basic anion exchangers are reacted with ethylene oxide at a pH of 8 to 10.

4. Process according to Claim 1, wherein the pH is set by continuous addition of sulphuric acid.

## Revendications

1. Procédé pour la préparation d'échangeurs d'anions fortement basiques à base de polymères réticulés de composés vinylaromatiques par réaction d'échangeurs d'anions faiblement basiques portant des groupes amino tertiaires avec l'oxyde d'éthylène, **caractérisé en ce que** l'on fait réagir les échangeurs d'anions faiblement basiques avec l'oxyde d'éthylène à une température de 70 à 75°C et à un pH de 7 à 11.

2. Procédé selon la revendication 1, selon lequel le pH est maintenu dans l'intervalle de 7 à 11 pendant tout le cours de la réaction.

3. Procédé selon la revendication 1, selon lequel on fait réagir les échangeurs d'anions faiblement basiques avec l'oxyde d'éthylène à un pH de 8 à 10.

4. Procédé selon la revendication 1, selon lequel on règle le pH par addition continue d'acide sulfurique.
